# EUROPEAN PATENT APPLICATION

(11) **EP 1 988 662 A1**
(43) Date of publication of application: **05.11.2008**
(21) Application number: 06791232.9
(22) Date of filing: 10.10.2006
(51) Int. Cl.: H04L 12/28, H04Q 7/38

(54) **A METHOD FOR REALIZING CALLED SERVICE AND A SYSTEM THEREOF**

(30) Priority: 20.02.2006 CN 200610059951
(71) Applicant: Huawei Technologies Co., Ltd., Longgang District, Shenzhen Guangdong 518129 (CN)
(72) Inventor: LIU, Wenyu, Shenzhen, Guangdong 518129 (CN)
(74) Representative: Casalonga, Axel
(86) International application number: PCT/CN2006/002652
(87) International publication number: WO 2007/095796

(57) **Abstract**

A method for realizing called service includes the following steps: A. determining a new Service Call Session Control Function (S-CSCF) for a called user at a network side after it is determined that an S-CSCF that currently provides service to the called user cannot provide service, and sending a re-registration notification from the network side to the called user via a home Proxy Call Session Control Function (P-CSCF) of the Called user according to P-CSCF information of the called user stored in a home subscriber server (HSS); B. performing re-registration by the called user, and C. transferring a session invitation message to the called user via the new S-CSCF. The present invention further provides a system for realizing called service. With the method and system according to the present invention, the network side can provide service for a called user when the S-CSCF originally assigned to provide service for the called user cannot provide service.

## Description

### FIELD OF THE INVENTION

The present invention relates to an IP multimedia technology, and more particularly, to a method and system for realizing called service in an IP multimedia subsystem.

### BACKGROUND

IP multimedia subsystem (IMS) is a functional module newly added for the R5 version system of wideband code division multiple access (WCDMA) by the third generation project organization (3GPP), for providing relevant control mechanism for IP-based multimedia services such as Voice over IP (VoIP) and television conference service on the basis of packet switched domain connection. Main functional entities of the IMS include Call Session Control functions (CSCFs). In the IMS, the Call Session Control Functions (CSCFs) include interrogating CSCF (I-CSCF), proxy CSCF (P-CSCF) and serving CSCF (S-CSCF).

The P-CSCF is the first step for user equipment (UE) to communicate with the IMS, which forwards a Session Initiation Protocol (SIP) message received from the UE to an SIP server located in a home network and also forwards the SIP message received from an SIP server in a home network to the UE. According to a set of rules of address analysis and possible modifications established by the network carrier, the P-CSCF can also modify a sent request. The UE mentioned herein may also denote a user.

The function of I-CSCF is to provide an entrance to the home network and hide the topological graph from other networks, and the I-CSCF may flexibly select an S-CSCF.

The S-CSCF is a core network element of IMS, and is an SIP server for implementing session processing and session control of UE, which includes routing an originating session to an outside network and routing a terminating session to a visited network. While processing an incoming SIP session request service, the S-CSCF determines whether an application server is required to receive relevant information. For example, if a user has subscribed a forwarding service provided by an application server, the S-CSCF forwards a call to the application server for processing. The determination is based on information received from a home subscriber server (HSS) or other sources such as an application server. For example, if a user subscribes a forwarding service, an HSS will notify an S-CSCF of the subscription information of the user.

All CSCF functions may generate and output detailed records of a call for charging processing.

The HSS evolves from a home location register (HLR) and an authentication center (AUC), and is a master database for a given user and stores user profile and relevant information about which core network is providing services for the user. The HSS is an entity containing registration information for supporting a network entity to deal with a call/session. The HSS also supports user's authentication, authorization and accounting function (AAA). Through the authentication, authorization, name/address resolution services, the HSS facilitates a call control server to complete the routing/roaming function.

The HSS is responsible for storing the following user-related information: (1) user identification, number and address information; (2) user security information, network access control information required for authentication and authorization; (3) user location information at an inter-system level, i.e. information on intersystem location stored after user registration is processed by the HSS; (4) user's summary information. Based on the user-related information, the HSS may also provide support for entities of different control systems such as a circuit domain control system, a PS domain control system, and an IP multimedia control system.

In general, depending on whether a user initiates a registration process, registration states of the user may be classified into registered state, logoff state and unregistered state. The registered state means that a common user identification has completed the registration process and is allocated with a serving S-CSCF. The logoff state means that a common user identification does not initiate the register process at all. The unregistered state means that a common user identification does not initiate the register process, but is, as a callee, assigned with a serving S-CSCF or there is an S-CSCF that has stored the description information of the user corresponding to the common user identification.

As for the common user identification, each user who has subscribed the IMS service is allocated with one or more private user identifications by the home network carrier, which is used in registration, authorization, management and charging process and in the format of network access identifier (NAI). Each IMS user also has one or more common user identifications for identifying himself and finding the correspondent during communicating with other user. The private user identification is generally not public to others while the common user identification is public to others for being used in sessions of various services.

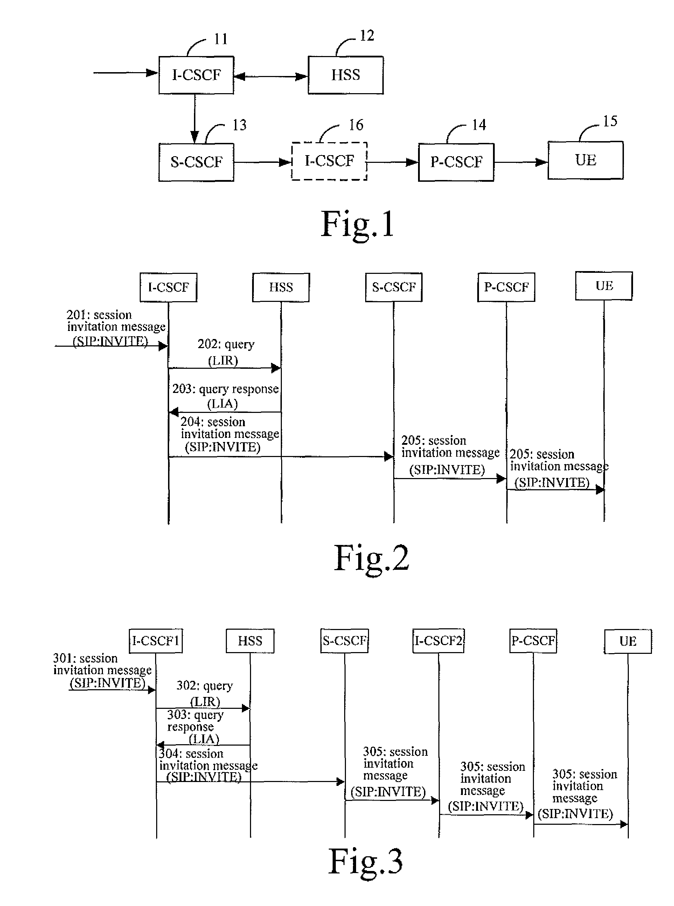

As shown in Fig.1, the prior art system for realizing called service includes an I-CSCF 11, an HSS 12, an S-CSCF 13,a P-CSCF 14, a UE 15, and may further include an I-CSCF 16.

The I-CSCF 11 receives a session invitation message inputted from outside, receives a query response message returned from the HSS 12 after sending a query message to the HSS 12; and forwards the session invitation message to the S-CSCF 13.

The HSS 12 returns the query response message to the I-CSCF 11 after receiving the query message sent from the I-CSCF 11.

The S-CSCF 13 receives the session invitation message forwarded by the I-CSCF 11 and then forwards the session invitation message to the P-CSCF 14 directly or via the I-CSCF 16.

The P-CSCF 14 receives the session invitation message forwarded by the S-CSCF 13 and then forwards the session invitation message to the UE 15.

The UE 15 receives the session invitation message forwarded by the P-CSCF 14.

The optional unit I-CSCF 16 receives the session invitation message forwarded by the S-CSCF 13 and then forwards the session invitation message to the P-CSCF 14.

The I-CSCF 16 in Fig. 1 is used when topology hiding characteristic is adopted. In practical application, the I-CSCF 16 and I-CSCF 11 may be two different entities or may be a same entity.

As shown in Fig.2, the prior art called procedure includes the following steps.

Step 201: The I-CSCF receives a session invitation message (SIP: INVITE).

Step 202: The I-CSCF sends a query message for querying an S-CSCF for a called user to the HSS (LIR).

Step 203: The I-CSCF receives a query response message returned from the HSS (LIA).

In step 203, the HSS generally returns the location information of S-CSCF such as address. The S-CSCF is an S-CSCF assigned to provide service to the called user.

Step 204: The I-CSCF forwards the session invitation message to the S-CSCF (SIP: INVITE).

Step 205: The S-CSCF sends the session invitation message after processing to the called user, i.e. the called UE, via the P-CSCF (SIP: INVITE).

In general, the P-CSCF forwards the session invitation message to the called user after receiving the session invitation message sent from the S-CSCF.

As shown in Fig.3, the called procedure while using the topology hiding characteristic includes the following steps.

Step 341 ∼step 304: Description thereof is substantially identical to that of steps 201 ∼ 204 except that I-CSCF in steps 201 ∼ 204 is replaced by an I-CSCF1 herein.

Step 345: The S-CSCF sends the session invitation message via the P-CSCF after processing, and topology hiding is done between the S-CSCF and the P-CSCF via an I-CSCF2.

In general, the P-CSCF forwards the session invitation message to the called user after receiving the session invitation message sent from the S-CSCF.

Here, I-CSCF 1 and I-CSCF 2 may be a same entity or may be two independent entities.

In step 203 of Fig.2 or step 303 of Fig.3, the LIA message may be used when the HSS returns the query response message to the I-CSCF/I-CSCF 1. Detail description of the LIA message is shown in Table 1:

**Table 1**

| Parameter names in 3GPP protocol (Information element name) | Parameter names in AVP protocol (Mapping to Diameter AVP) | Characteristic (Cat.) | Description |
|---|---|---|---|
| Result | Result-Code /Experimental-Result | Necessary parameters (M) | Operating results |
| S-CSCF Name | Server-Name | Conditional optional parameters (C) | Name of assigned S-CSCF |
| S-CSCF Capabilities | Server-Capabilities | Optional parameters (O) | S-CSCF capability set for facilitating I-CSCF to select S-CSCF |

In general, the called user in Fig.2 or 3 can receive called service only after a registration process.

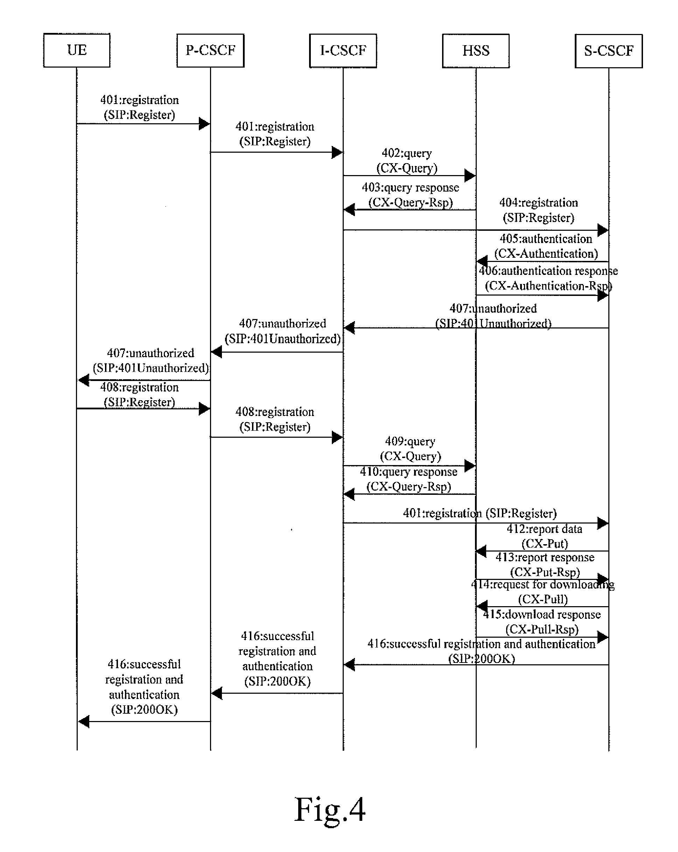

In the prior art, as shown in Fig.4, a registration process of a user includes the following steps.

Step 401: The UE initiates registration (SIP: Register) and the information for initiating registration reaches the I-CSCF via the P-CSCF.

Step 402: The I-CSCF sends a query message for querying the S-CSCF to the HSS (CX-Query).

Step 403: The I-CSCF receives the query response message returned from the HSS (CX-Query-Rsp).

The query response message generally includes the capability set information of S-CSCF required by the user, and may further include location information of S-CSCF if the user has registered previously.

Step 404: The I-CSCF forwards user's registration to the I-CSCF (SIP: Register).

If the response message in step 403 includes the capability set information of S-CSCF required by the user but does not include the location information of S-CSCF, the following process is generally included between Step 403 and Step 404: a process for the I-CSCF to select an S-CSCF according to the capability set information, and the specific implementation for the I-CSCF to select an S-CSCF does not affect the whole flow of Fig.4.

Step 405: The S-CSCF sends to the HSS a request for authentication (CX-Authentication).

Step 406: The S-CSCF obtains an authentication response message from the HSS (CX-Authenticatian-Rsp).

Step 407: The S-CSCF notifies the user that it is not authenticated and an authentication is required (SIP: 401 Unauthorized), and a message for requiring an authentication is forwarded to the user via the I-CSCF and P-CSCF.

Step 408: The user initiates a new registration to feed back the result of authentication calculation (SIP: Register), and the information on newly initiated registration reaches the I-CSCF via the P-CSCF.

Step 409: The I-CSCF sends a query message for querying the S-CSCF to the HSS.

Step 410: The I-CSCF obtains a query response message from the HSS.

Step 411: The I-CSCF forwards user's registration to the S-CSCF.

Step 412: The S-CSCF reports user data to the HSS (CX-Put).

Step 413: The S-CSCF receives the reported response message returned from the HSS (CX-Put-Rsp).

Step 414: The S-CSCF sends to the HSS a request for downloading data (CX-Pull).

Step 415: The S-CSCF receives a download response message returned from the HSS (CX-Pull-Rsp).

Step 416: The S-CSCF notifies the user of a message for successful registration and authentication (SIP: 200 OK), and the message is forwarded to the user via the I-CSCF and P-CSCF.

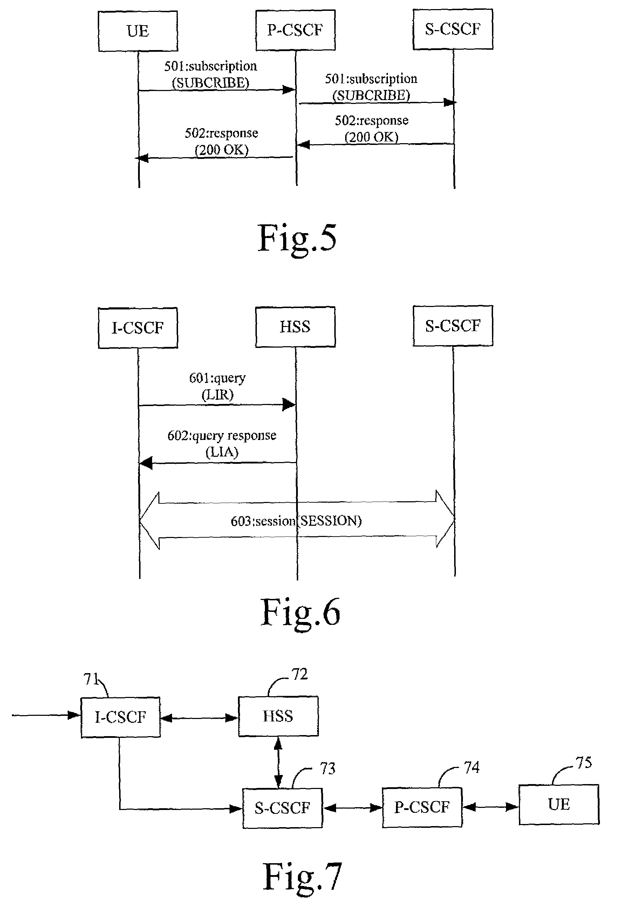

In general, after registration, the user subscribes its own registration state from S-CSCF in order to know the maintenance information of registration state by the network. Fig. 5 is a process diagram of a user subscribing its own registration state, which includes the following steps.

Step 501: The user sends a message for subscribing registration state to the S-CSCF via the P-CSCF (SUBCRIBE).

Step 502: The S-CSCF returns the response message to the user via the P-CSCF (200 OK).

Both of the called procedures shown in Figs.2 and 3 and the registration procedure shown in Fig.4 involve the process for I-CSCF to select an S-CSCF. Fig. 6 is a process diagram of I-CSCF selecting an S-CSCF, which includes the following steps.

Step 601: The I-CSCF sends a query message for querying the S-CSCF to the HSS (LIR).

Step 602: The HSS returns a query response message to the I-CSCF (LIA).

In case of being applied to the called procedure of Fig. 2 or 3, in step 602, the HSS generally returns the location information of the S-CSCF. In case of being applied to the called procedure of Fig.4, in Step 602, the HSS generally returns capability information of the S-CSCF required by the user, and I-CSCF generally selects an S-CSCF according to the capability information of the S-CSCF required by the user after receiving the response message.

Fig. 6 further shows, in dotted line, Step 603 of a selected S-CSCF providing service to a user after the I-CSCF selects the S-CSCF.

Step 603: The S-CSCF selected by the I-CSCF provides service to the user (SESSION).

The step 603 may be same as Step 204 ∼ Step 205 in Fig.2 or Step 304 ∼ Step 305 in Fig.3 or Step 404 ∼ Step 416 in Fig.4.

A deficiency of the prior art is that, in the current system for realizing called service, when the S-CSCF assigned to provide service to a user cannot provide service due to some reason, the system cannot notify the user, resulting in the called service cannot be provided to the user. That is, there is no processing method for S-CSCF disaster-tolerance. The lacking of disaster-tolerance of S-CSCF specifically means that the system cannot continue providing service for a user when the S-CSCF assigned to provide service for the user cannot provide service due to reasons such as fire.

### SUMMARY

In view of this, a primary object of the present invention is to provide a method for realizing called service, which can provide service for a called user at a network side when an S-CSCF originally assigned to provide service for the called user cannot provide service for the called user.

Another primary object of the present invention is to provide a system for realizing called service, which can provide service for a called user at a network side when an S-CSCF originally assigned to provide service for the called user cannot provide service for the called user.

The technical solution of the present invention is achieved as follows.

A method for realizing called service includes the following steps:
A. determining a new Service Call Session Control Function (S-CSCF) for a called user at a network side after it is determined that an S-CSCF currently providing service to the called user cannot provide the service, and sending a re-registration notification to the called user via a Proxy Call Session Control Function (P-CSCF) of the called user according to P-CSCF information of the called user stored in a Home Subscriber Server (HSS);
B. performing, by the called user, re-registration; and
C. transferring a session invitation message to the called user via the new S-CSCF.

The method further includes, prior to step A, receiving a session invitation message from outside by an Interrogating Call Session Control Function (I-CSCF).

The step A includes:
A11. sending, by the I-CSCF, a query message for querying an S-CSCF to the HSS, and returning, by the HSS, a query response message including S-CSCF information on an S-CSCF currently providing service to the called user and P-CSCF information on a P-CSCF currently providing service to the called user, to the I-CSCF;
A12. determining, by the I-CSCF, a new S-CSCF after it is determined that the S-CSCF currently providing service to the called user cannot provide services, and sending a session invitation message including P-CSCF information to the new S-CSCF; and
A13. sending a re-registration notification from the new S-CSCF to the called user via P-CSCF.

The method further includes, prior to step A, receiving a session invitation message from outside by the I-CSCF.

The step A includes:
A21. sending, by the I-CSCF, a query message for querying an S-CSCF to the HSS, and returning, by the HSS, a query response message including S-CSCF information on an S-CSCF currently providing service to the called user and P-CSCF information on a P-CSCF currently providing service to the called user, to the I-CSCF;
A22. determining, by the I-CSCF, a new S-CSCF after it is determined that the S-CSCF currently providing service to the called user cannot provide service, and forwarding the received session invitation message to the new S-CSCF;
A23. sending, by the new S-CSCF, a query message to the HSS, and returning, by the HSS, a query response message including P-CSCF information to the new S-CSCF; and
A24. sending, by the new S-CSCF, a re-registration notification to the called user via the P-CSCF.

The method further includes, prior to step A, receiving a session invitation message from outside by the I-CSCF.

The step A includes:
A31. sending, by the I-CSCF, a query message for querying an S-CSCF to the HSS, and returning, by the HSS, a query response message including S-CSCF information on an S-CSCF currently providing service to the called user and P-CSCF information on a P-CSCF currently providing service to the called user, to the I-CSCF;
A32. sending, by the I-CSCF, a re-registration notification to the called user via the P-CSCF, and determining, by the I-CSCF, a new S-CSCF after it is determined that the S-CSCF currently providing service to the called user cannot provide service.

The method further includes, between step A32 and step C, sending a session invitation message from the I-CSCF to the new S-CSCF.

The session invitation message received by the new S-CSCF includes information indicating that the S-CSCF assigned to provide service for a called user cannot provide service.

The method further includes, prior to step A, receiving a session invitation message from outside by the I-CSCF.

The step A includes:
A41. sending, by the I-CSCF, a query message for querying an S-CSCF to the HSS, receiving, by the HSS, the query message, and determining a new S-CSCF after it is determined that the S-CSCF currently providing service to the called user cannot provide service;
A42. sending, by the HSS, a re-registration notification to the new S-CSCF, and sending, by the I-CSCF, the P-CSCF information to the new S-CSCF;
A43. sending, by the new S-CSCF, the re-registration notification to the called user via the P-CSCF after receiving the re-registration notification by the new S-CSCF.

The method further includes, between step A41 and step C, returning, by the HSS, a query response message including information on the new S-CSCF selected by HSS to the I-CSCF.

The method further includes, prior to step C, sending, by the I-CSCF, a session invitation message to the new S-CSCF after receiving the query response message.

Information between the new S-CSCF and P-CSCF is transferred via the I-CSCF.

After the I-CSCF receives the query response message returned from the HSS, the method further includes, prior to step B, sending, by the I-CSCF, the determined new S-CSCF information to the HSS.

After the new S-CSCF receives the session invitation message, the method further includes, prior to step B, sending from the new S-CSCF to the HSS information indicating that the new S-CSCF itself is selected.

The P-CSCF information of the called user is stored in the HSS during the registration of the called user.

The method further includes, prior to step A, sending, by the called user, a registration request to the network side via the P-CSCF, and storing, by the network side, the P-CSCF information in the HSS after receiving the registration request.

Storing the P-CSCF information in the HSS includes: storing the P-CSCF information of the called user in the HSS when the I-CSCF at the network side sends a query information to the HSS during registration; or
storing the P-CSCF information of the called user in the HSS when the S-CSCF at the network side sends an authentication message to the HSS during registration; or
storing the P-CSCF information of the called user in the HSS when the S-CSCF at the network side reports data to the HSS during registration; or
storing the P-CSCF information of the called user in the HSS when the S-CSCF at the network side sends to the HSS a request for downloading data during registration.

The HSS stores CONTACT information, call identification, CALLID, command sequence, CSEQ, and TAG of the called user while storing P-CSCF information.

Accordingly, the re-registration notification initiated at the network side is created based on the CONTACT information, CALLID, CSEQ and TAG stored in the HSS.

The called user sends a message for subscribing registration state to the S-CSCF after receiving a successful registration message, and the S-CSCF sends subscribed information to the HSS after receiving the message for subscribing registration state.

Accordingly, the re-registration notification initiated at the network side is created based on subscription information of the called user stored in the HSS.

The re-registration notification is transferred by using a NOTIFY message, or a MESSAGE message, or an INFO message or a REGISTER message.

The query response message including P-CSCF information further includes CONTACT information, CALLID, CSEQ and TAG of the called user.

Accordingly, the re-registration notification is created based on the CONTACT information, CALLID, CSEQ and TAG of the called user.

The carrying of P-CSCF information is implemented by reusing, or extending or adding information element.

The carrying of CONTACT information is implemented by reusing, or extending or adding information element.

The sending of the determined new S-CSCF information from the I-CSCF to the HSS is implemented by reusing, or extending or adding information element.

The sending of the information indicating that the new S-CSCF itself is selected from the new S-CSCF to the HSS is implemented by reusing, or extending or adding information element.

The P-CSCF information is a P-CSCF address.

The CONTACT information is a CONTACT address.

A system for realizing called service includes a first I-CSCF, an HSS, a S-CSCF, a P-CSCF, a user equipment (UE), wherein the first I-CSCF is adapted to receive a session invitation message inputted from outside and then forward it to the S-CSCF, and interact information with the HSS; the S-CSCF is adapted to receive the session invitation message and then forward it to the P-CSCF; and the P-CSCF is adapted to receive the session invitation message and then forwards it to the UE.

The HSS is further adapted to provide P-CSCF information stored therein and interact the re-registration message with the S-CSCF;

The P-CSCF is adapted to interact the re-registration message with the S-CSCF, interact the re-registration message with the UE, receive the re-registration notification and then forward it to the UE, and the UE is adapted to receive the re-registration notification and then send the re-registration message to the P-CSCF.

The HSS is adapted to send the P-CSCF information to the first I-CSCF.

The system further includes a connection, between the first I-CSCF and the S-CSCF, adapted to send the P-CSCF information from the first I-CSCF to the S-CSCF;

The system further includes a connection, between the S-CSCF and the P-CSCF, adapted to send the re-registration notification from the S-CSCF to the P-CSCF.

The HSS is adapted to send the P-CSCF information to the S-CSCF.

The system further includes a connection, between the S-CSCF and the HSS, adapted to send a query message from the S-CSCF to the HSS, and return a query response message from the HSS to the S-CSCF.

The system further includes a connection, between the S-CSCF and the P-CSCF, adapted to send the re-registration notification from the S-CSCF to the P-CSCF.

The HSS is adapted to send the P-CSCF information to the first I-CSCF.

The system further includes a connection, between the first I-CSCF and the P-CSCF, adapted to send the re-registration notification from the first I-CSCF to the P-CSCF.

The HSS is adapted to send the P-CSCF information to the S-CSCF.

The system further includes a connection, between the S-CSCF and the P-CSCF, adapted to send the re-registration notification from the S-CSCF to the P-CSCF.

The system further includes a connection, between the first I-CSCF and the HSS, adapted to send S-CSCF information from the first I-CSCF to the HSS.

The system further includes a connection, between the S-CSCF and the HSS, adapted to send information of the S-CSCF to the HSS.

The system includes a second I-CSCF between the S-CSCF and the P-CSCF.

The second I-CSCF is adapted to receive the information sent from the S-CSCF and then forward it to the P-CSCF, and receive the information sent from the P-CSCF and then forward it to the S-CSCF.

The second I-CSCF and the first I-CSCF are a same entity or two different entities.

The system further includes a connection, between the first I-CSCF and the HSS, adapted to send P-CSCF information from the first I-CSCF to the HSS.

The system further includes a connection, between the S-CSCF and the HSS, adapted to send P-CSCF information from the S-CSCF to the HSS.

With the method and system for realizing called service provided by the present invention, when an S-CSCF is not available due to overload or disaster, a called user can be notified to re-register from the network side via the P-CSCF with the P-CSCF information of the called user stored in the HSS, and a session can be transferred to the called user via the new S-CSCF after the called user completes re-registration. In this way, service for the called user can be continued providing from the network side.

### BRIEF DESCRIPTION OF THE DRAWINGS

Fig. 1 is a schematic diagram showing a system for realizing called services according to the prior art;

Fig. 2 is a schematic diagram showing a process for realizing called service according to the prior art;

Fig.3 is a schematic diagram showing a process for realizing called service when topology hiding characteristic is used according to the prior art;

Fig.4 is a schematic diagram showing a process for registration of a user according to the prior art;

Fig.5 is a schematic diagram showing a process for a user to subscribe registration state of himself according to the prior art;

Fig.6 is a schematic diagram showing a process for I-CSCF to select S-CSCF according to the prior art;

Fig. 7 is a schematic diagram showing a system for realizing called service according to an embodiment of the present invention;

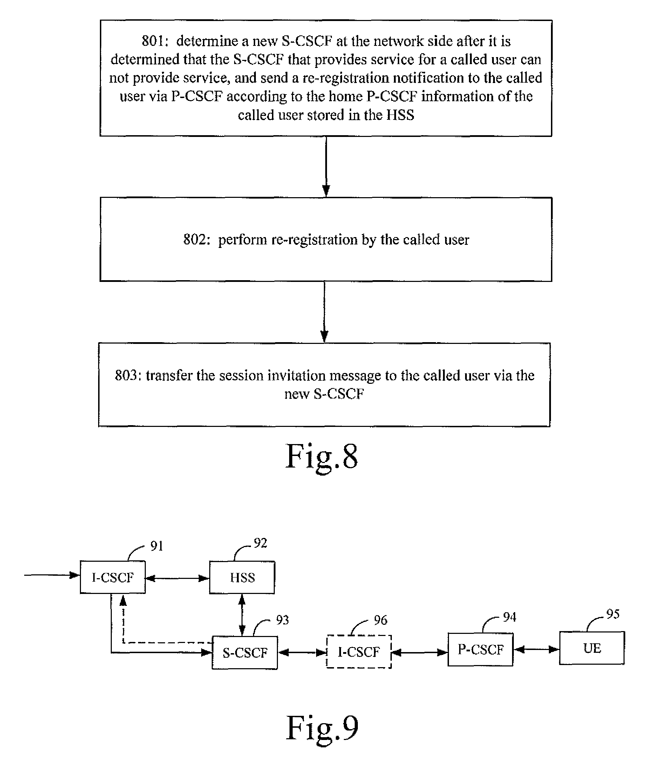

Fig. 8 is a schematic diagram showing a process for realizing called service according to an embodiment of the present invention;

Fig. 9 is a schematic diagram showing a system for realizing called service according to a first embodiment 1 of the present invention;

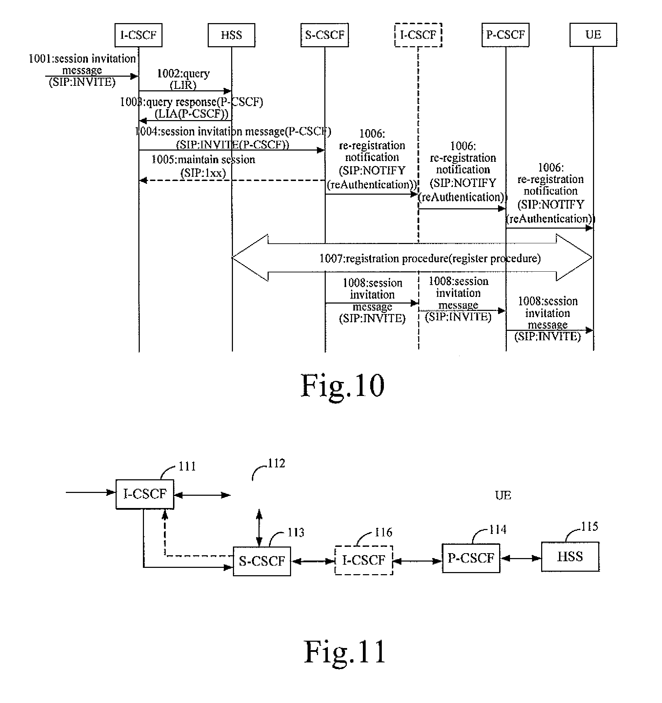

Fig. 10 is a schematic diagram showing a process for realizing called service according to a first embodiment of the present invention;

Fig. 11 is a schematic diagram showing a system for realizing called service according to a second embodiment of the present invention;

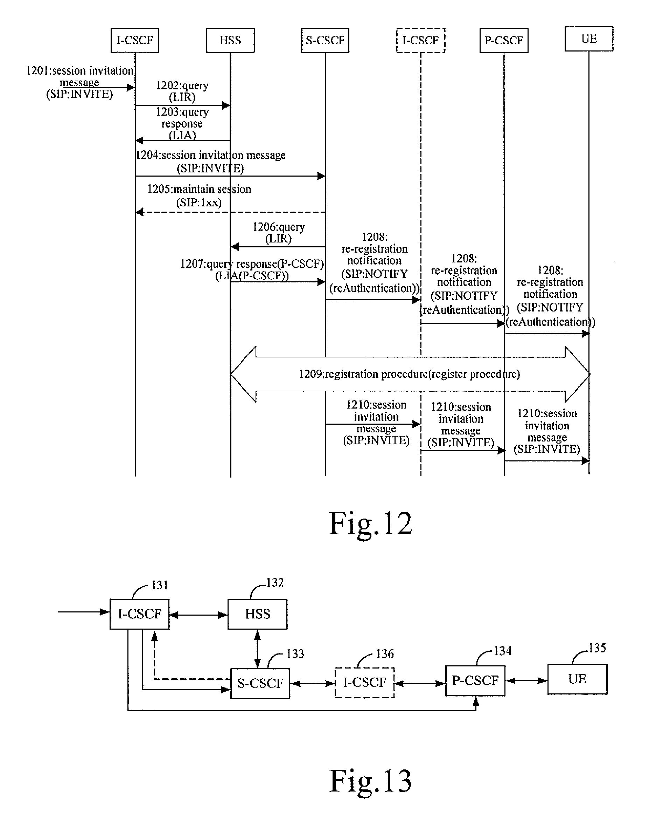

Fig. 12 is a schematic diagram showing a process for realizing called service according to a second embodiment of the present invention;

Fig. 13 is a schematic diagram showing a system for realizing called service according to a third embodiment of the present invention;

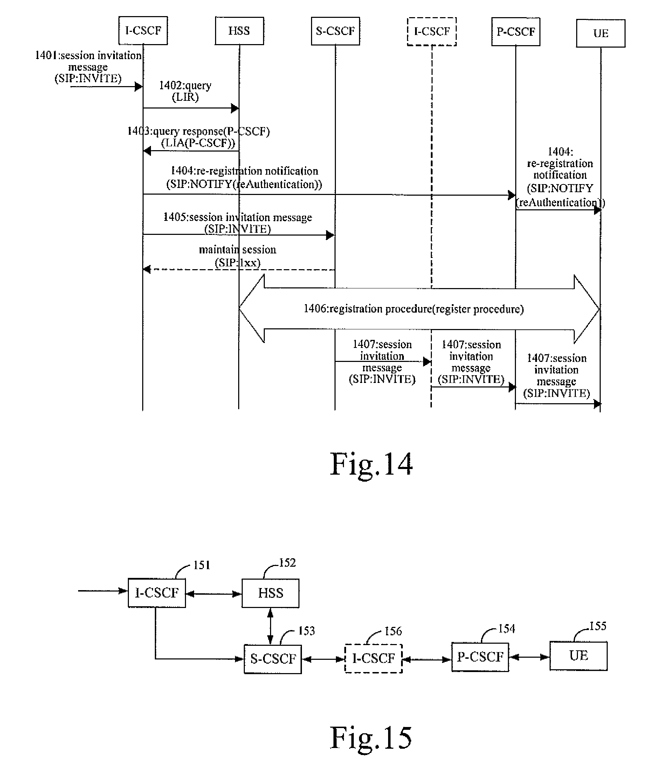

Fig. 14 is a schematic diagram showing a process for realizing called service according to a third embodiment of the present invention;

Fig. 15 is a schematic diagram showing a system for realizing called service according to a fourth embodiment of the present invention;

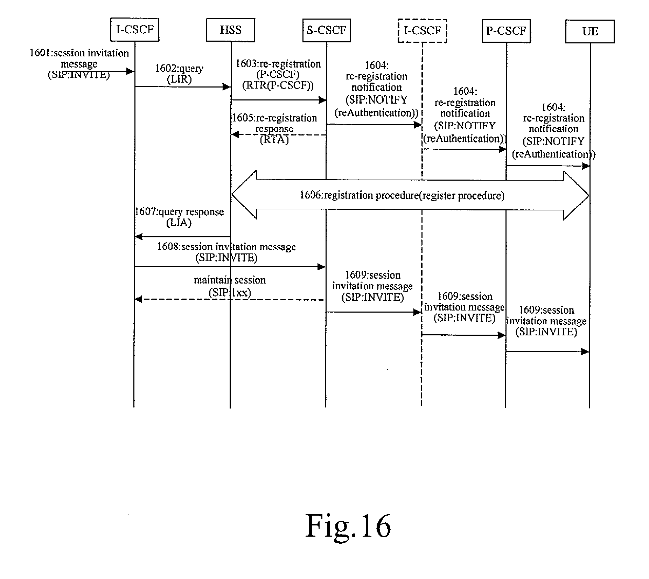

Fig. 16 is a schematic diagram showing a process for realizing called service according to a fourth embodiment of the present invention;

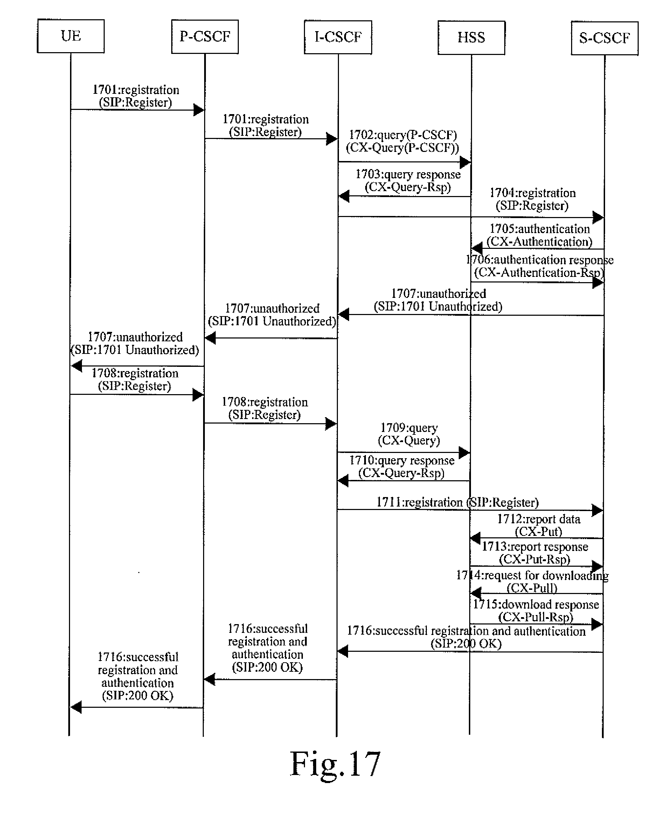

Fig. 17 is a schematic diagram showing a first process for a user to register before the called procedure according to an embodiment of the present invention;

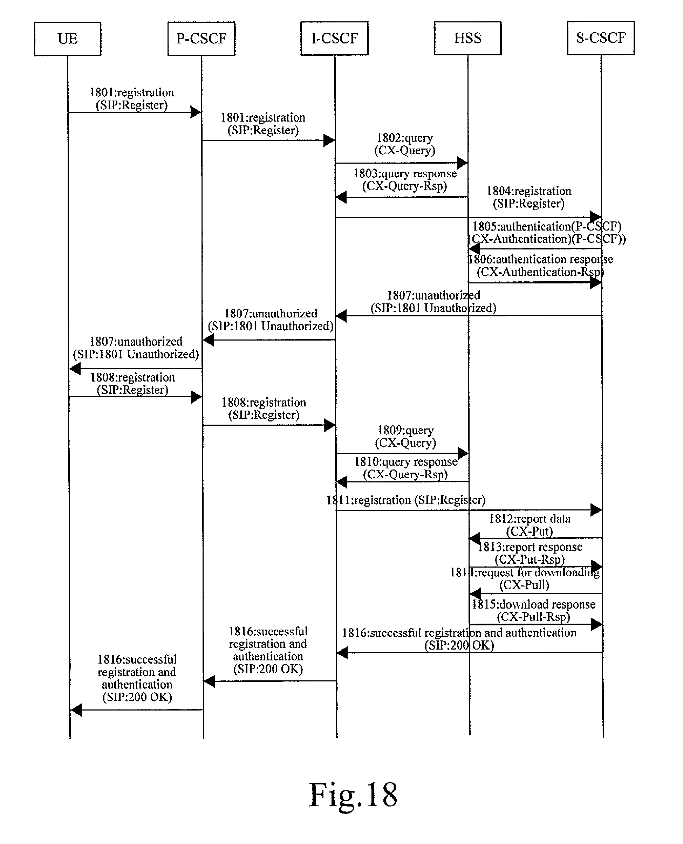

Fig. 18 is a schematic diagram showing a second process for a user to register before the called procedure according to an embodiment of the present invention;

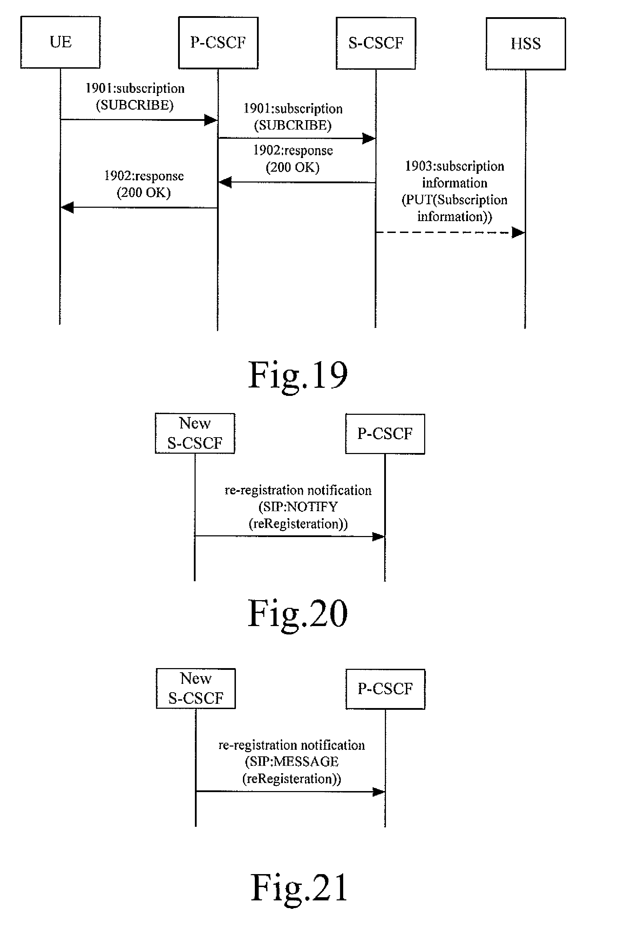

Fig. 19 is a schematic diagram showing a process for storing registration information in HSS when a user is subscribing registration state of himself according to an embodiment of the present invention;

Fig. 20 is a schematic diagram showing the principle of sending a re-registration notification from S-CSCF to P-CSCF with a NOTIFY message according to an embodiment of the present invention;

Fig. 21 is a schematic diagram showing the principle of sending a re-registration notification from S-CSCF to P-CSCF with a MESSAGE message according to an embodiment of the present invention;

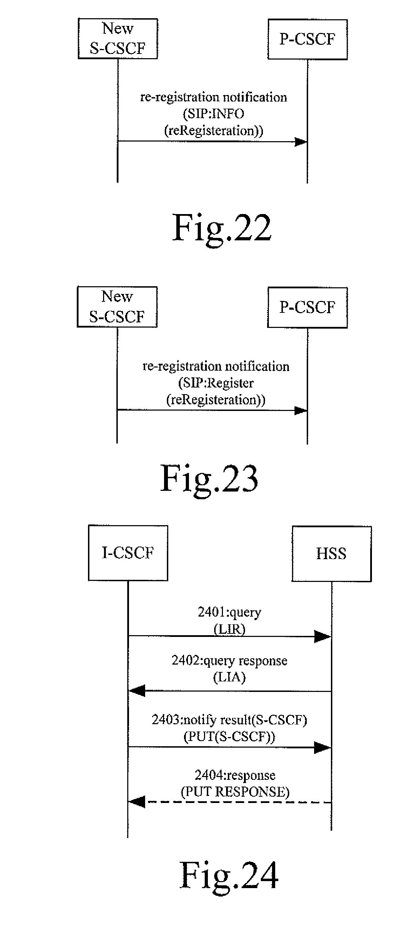

Fig. 22 is a schematic diagram showing the principle of sending a re-registration notification from S-CSCF to P-CSCF with an INFO message according to an embodiment of the present invention;

Fig. 23 is a schematic diagram showing the principle of sending a re-registration notification from S-CSCF to P-CSCF with a RIGISTER message according to an embodiment of the present invention;

Fig. 24 is a schematic diagram showing a first process for storing the selected S-CSCF information in HSS according to an embodiment of the present invention; and

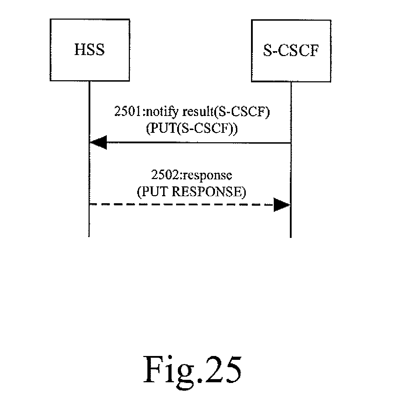

Fig. 25 is a schematic diagram showing a second process for storing the selected S-CSCF information in HSS according to an embodiment of the present invention.

### DETAILED DESCRIPTION

The gist of the present invention is as follows: when it is determined at the network side that an S-CSCF originally assigned to provide service for a called user cannot provide service for the called user, the called user is notified, via a P-CSCF by means of the P-CSCF information of the called user stored in an HSS, to re-register. After the called user completes re-registration, a session invitation message is sent to the called user via a new S-CSCF.

Fig. 7 is a schematic diagram showing a system for realizing called service according to the present invention. The system of Fig.7 includes an I-CSCF 71, an HSS 72, an S-CSCF 73, a P-CSCF 74 and a UE 75.

The I-CSCF 71 receives a session invitation message inputted from outside and then forwards it to the S-CSCF 73, and interacts information with the HSS 72.

The HSS 72 interacts information with the I-CSCF 71, and interacts re-registration message with the S-CSCF 73. The HSS 72 also provides P-CSCF 74 information stored therein to transfer re-registration notification via the P-CSCF 74.

The S-CSCF 73 interacts re-registration messages with the HSS 72 and the P-CSCF 74, receives the session invitation message forwarded by the I-CSCF 71 and then forwards it to the P-CSCF 74.

The P-CSCF 74 interacts re-registration messages with the S-CSCF 73 and the UE 75, receives the re-registration notification and then forwards it to the UE 75. The P-CSCF 74 also receives the session invitation message forwarded by the S-CSCF 73 and then forwards it to the UE 15.

The UE 75 receives the re-registration notification forwarded by the P-CSCF 74, interacts the re-registration message with the P-CSCF 74, and receives the session invitation message forwarded by the P-CSCF 74.

The re-registration message herein is a message transferred during re-registration process.

Fig. 8 is a schematic diagram showing a process for realizing called service according to the present invention, including the following steps.

Step 801: A network side determines a new S-CSCF for a called user after it is determined that an S-CSCF assigned to provide service for the called user cannot provide service, and sends a re-registration notification to the called user via the P-CSCF according to the P-CSCF information of the called user stored in the HSS.

Here, the network side refers to an I-CSCF, an S-CSCF or an HSS.

In general, prior to step 801, a step of receiving a session invitation message sent from outside by the I-CSCF at the network side is included.

Steps 802 ∼ 803: The called user carries out re-registration, and the network side transfers a session invitation message to the called user via a new S-CSCF.

In the present invention, the HSS may provide P-CSCF information when returning a query response message to the I-CSCF after receiving a query message from the I-CSCF, or after receiving the query message from the S-CSCF, or when initiating the re-registration notification to the S-CSCF. Here, the re-registration notification may be initiated by the S-CSCF or may be initiated by the I-CSCF, when the HSS provides P-CSCF information while returning query response message to the I-CSCF after receiving the query message of I-CSCF. In the present invention, the P-CSCF information is the information that can represent location of the P-CSCF in the network, such as a P-CSCF address.

### Embodiment 1

In this embodiment, the HSS provides P-CSCF information while returning a query response message to the I-CSCF after receiving the query message from the I-CSCF. In this embodiment, the re-registration notification is initiated by the S-CSCF.

Fig. 9 is a schematic diagram showing a system for realizing called service according to this embodiment. The system of Fig.9 includes an I-CSCF 91, an HSS 92, an S-CSCF 93, a P-CSCF 94, a UE 95, and may further include an I-CSCF 96.

The I-CSCF 91 receives a session invitation message inputted from outside and sends a session invitation message including P-CSCF 94 information to the S-CSCF 93. The I-CSCF 91 also sends a query message to the HSS 92 and receives a query response message including P-CSCF 94 information returned from the HSS 92. Further, the I-CSCF 91 may also receive a message for maintaining session returned from the S-CSCF 93.

The HSS 92 receives the query message sent from the I-CSCF 91 and returns the query response message including P-CSCF 94 information to the I-CSCF 91. The HSS 92 may also interact re-registration message with the S-CSCF 93 and interact re-registration message with the I-CSCF 96.

The S-CSCF 93 receives the session invitation message including P-CSCF 94 information sent from the I-CSCF 91 and forwards the session invitation message to the P-CSCF 94 directly or via the I-CSCF 96. The S-CSCF 93 may also initiate a re-registration notification and send the re-registration notification to the P-CSCF 94 directly or via the I-CSCF 96. Further, the S-CSCF 93 may also interact re-registration message with the HSS 92 and interact re-registration message with the P-CSCF 94 via the I-CSCF 96; and return a message for maintaining session to the I-CSCF 91.

The P-CSCF 94 receives the session invitation message forwarded by the S-CSCF 93 and forwards the session invitation message to the UE 95. The P-CSCF 94 may also receive the re-registration notification sent from the S-CSCF 93 directly or via the I-CSCF 96 and forward the re-registration notification to the UE 95. Further, the P-CSCF 94 may also interact the re-registration message with the UE 95 and interact the re-registration message with the S-CSCF 93 directly or via the I-CSCF 96.

The UE 95 receives the session invitation message forwarded by the P-CSCF 94, and may also receive the re-registration notification forwarded by the P-CSCF 94. Further, the UE 95 may also interact the re-registration message with the P-CSCF 94.

The optional unit I-CSCF 96 receives the session invitation message forwarded by the S-CSCF 93 and forwards the session invitation message to the P-CSCF 94. The I-CSCF 96 may also receive the re-registration notification sent from the S-CSCF 93 and forward the re-registration notification to the P-CSCF 94. Further, the I-CSCF 96 may also forward the re-registration message between the S-CSCF 93 and the P-CSCF 94, and interact the re-registration message with the HSS 92.

Fig. 10 is a schematic diagram showing a process for realizing called service according to this embodiment, including the following steps.

Step 1001 ∼ step 1002: Description thereof is identical to that of step 201 ∼ step 202.

Step 1003: The I-CSCF receives a query response message returned from the HSS that includes P-CSCF information.

The query response message in Step 1003 includes S-CSCF location information of the called user such as address. In the present embodiment, the I-CSCF may also receive contact information of the called user and may further receive other information related to the user's subscription such as parameters of call identification (CALLID), command sequence (CSEQ), from tag and to tag. The S-CSCF of the called user is the S-CSCF assigned to provide service for the called user.

The P-CSCF in Step 1003 is the P-CSCF of the called user.

Step 1004: The I-CSCF sends a session invitation message including P-CSCF information to the home S-CSCF of the called user.

As for the S-CSCF in step 1004, between Step 1003 and Step 1004, the I-CSCF determines whether S-CSCF already assigned to provide service for a called user can provide service after receiving the query response message. If the assigned S-CSCF can provide service, the S-CSCF in Step 1004 is the assigned S-CSCF and Step 1008 may be carried out directly after Step 1004. If the assigned S-CSCF cannot provide service, the I-CSCF select a new S-CSCF from a list of available S-CSCFs stored therein, and accordingly, the S-CSCF in step 1004 is the selected new S-CSCF.

Both of the process for the I-CSCF to determine whether the S-CSCF assigned to provide service for a called user can provide service and the process for the I-CSCF to select an S-CSCF can be implemented by various methods in prior art.

If the I-CSCF, in Step 1003, receives the CONTACT information of the called user and other information related to the user's subscription, then in Step 1004, the I-CSCF may further send to the S-CSCF the CONTACT information of the called user and the other information related to the user's subscription information.

Fig. 10 shows an optional Step 1005 in dotted line, and in practical application, step 1005 may or may not present.

Step 1005: the S-CSCF returns a message for maintaining session to the call source side after receiving the session invitation message.

The returned message in Step 1005 may be 1XX message in SIP.

In practical application, Step 1005 may be carried out at any position after step 1004.

Step 1006: the S-CSCF initiates a re-registration notification (reAuthentication) and sends the re-registration notification to the called user, i.e. the called UE, via the P-CSCF.

If the topology hiding characteristic is used, the re-registration notification initiated by the S-CSCF in Fig. 10 will be forwarded to the P-CSCF via the I-CSCF indicated by the dotted box.

Step 1007: The re-registration procedure (register procedure) initiated by UE is carried out.

Step 1007 may be identical to many registration procedures in prior art, e.g. the procedure shown in Fig.4.

Step 1008: The S-CSCF completes the session. Specifically, the S-CSCF forwards the received session invitation message to the called UE.

If the topology hiding feature is used, the session invitation message received by the S-CSCF in Fig. 10 will be forwarded to the P-CSCF via the I-CSCF indicated by the dotted box.

In practical application, the I-CSCF indicated by dotted box and that indicated by solid box in Fig.10 may be same entity, or may be two different entities, i.e. two independent entities.

### Embodiment 2:

In the present embodiment, the HSS provides the P-CSCF information to the S-CSCF after receiving a query message from the S-CSCF. In the present embodiment, the re-registration notification is initiated by the S-CSCF.

Fig. 11 is a schematic diagram showing a system for realizing called service according to this embodiment. The system shown in Fig. 11 includes an I-CSCF 111, an HSS 112, an S-CSCF 113, a P-CSCF 114, a UE 115, and may further include an I-CSCF 116.

The I-CSCF 111 receives a session invitation message inputted from outside and forwards the session invitation message to the S-CSCF 113. The I-CSCF 111 also sends a query message to the HSS 112 and receives a query response message returned from the HSS 112, Further, the I-CSCF 111 may also receive a message for maintaining session returned from the S-CSCF 113.

The HSS 112 receives the query message sent from the I-CSCF 111 and returns a query response message to the I-CSCF 111. The HSS 112 also receives a query message sent from the S-CSCF 113 and returns a query response message including P-CSCF 114 information to the S-CSCF 113. Further, the HSS 112 may also interact re-registration message with the S-CSCF 113 and interact re-registration message with the I-CSCF 116.

The S-CSCF 113 receives a session invitation message sent from the I-CSCF 111, sends a query message to the HSS 112 and receives a query response message including P-CSCF 114 information returned from the HSS 112. The S-CSCF 113 also sends a re-registration notification to the P-CSCF 114 directly or via the I-CSCF 116, interacts re-registration message with the HSS 112 and interacts re-registration message with the P-CSCF 114 directly or via the I-CSCF 116, and forwards the session invitation message to the P-CSCF 114 directly or via the I-CSCF 116. Further, the S-CSCF 113 may also return a message for maintaining session to the I-CSCF 111.

The P-CSCF 114 receives the re-registration notification sent from the S-CSCF 113 directly or via the I-CSCF 116 and forwards the re-registration notification to the UE 115, interacts the re-registration message with the UE 115 and interacts the re-registration message with the S-CSCF 113 directly or via the I-CSCF 116. The P-CSCF 114 also receives the session invitation message forwarded by the S-CSCF 113 and then forwards the session invitation message to the UE 115.

The UE 115 receives the re-registration notification forwarded by the P-CSCF 114; interacts the re-registration message with the P-CSCF 114, and receives the session invitation message forwarded by the P-CSCF 114.

The Optional unit I-CSCF 116 receives the re-registration notification sent from the S-CSCF 113 and then forwards the re-registration notification to P-CSCF 114. The I-CSCF 116 also forwards the re-registration message between the S-CSCF 113 and the P-CSCF 114, and interacts the re-registration message with the HSS 112. Further, the I-CSCF 116 receives the session invitation message forwarded by the S-CSCF 113 and then forwards the session invitation message to the P-CSCF 114.

Fig. 12 is a schematic diagram showing a process for realizing called service according to this embodiment, which includes the following steps.

Step 1201 ∼ Step 1203: Description thereof is identical to that of Step 201 ∼ Step 203.

Step 1204: the I-CSCF forwards the received session invitation message to the home S-CSCF of the called user.

As for the S-CSCF in step 1204, between Step 1203 and Step 1204, the I-CSCF determines whether the S-CSCF already assigned to provide service for a called user can provide service after receiving the query response message. If the assigned S-CSCF can provide service, the S-CSCF in Step 1204 is the assigned S-CSCF and Step 1210 may be carried out directly after step 1204. If the assigned S-CSCF cannot provide service, the I-CSCF selects a new S-CSCF from a list of available S-CSCFs stored therein, and accordingly, the S-CSCF in Step 1204 is the selected new S-CSCF.

Both of the process for the I-CSCF to determine whether the S-CSCF assigned to provide service for a called user can provide service and the process for the I-CSCF to select an S-CSCF can be implemented by various methods in the prior art.

Fig. 12 shows an optional step 1205 in dotted line, and in practical application, Step 1205 may or may not be present.

Step 1205: The S-CSCF returns a message for maintaining session to the call source side.

The returned message in Step 1205 may be 1XX message in SIP.

In practical application, Step 1205 may be carried out at any position after step 1204.

Step 1206: The S-CSCF sends a query message for querying P-CSCF information of the called user to the HSS.

Step 1207: The HSS returns a query response message including the P-CSCF information of the called user to the S-CSCF.

In step 1207, the query response message returned from the HSS to the S-CSCF may further include CONTACT information of the called user and other information related to the user's subscription such as parameters of CALLID, CSEQ and TAG.

The description of Step 1208 ∼ Step 1210 is identical to that of Step 1006 ∼ Step 1008 in the first embodiment.

In practical application, the I-CSCF indicated by the dotted box and that indicated by the solid box in Fig.12 may be two different entities, or may be a same entity.

### Embodiment 3:

In this embodiment, the HSS provides P-CSCF information while returning the query response message to the I-CSCF after receiving the query message from the I-CSCF. In this embodiment, the re-registration notification is initiated by the I-CSCF.

Fig. 13 is a schematic diagram showing a system for realizing called service according to this embodiment. The system shown in Fig. 13 includes an I-CSCF 131, an HSS 132, an S-CSCF 133, a P-CSCF 134, a UE 135, and may further include an I-CSCF 136.

The I-CSCF 131 receives a session invitation message inputted from outside, sends a query message to the HSS 132 and receives a query response message including P-CSCF 134 information returned from the HSS 132. The I-CSCF 131 also forwards the session invitation message to the S-CSCF 133. Further, the I-CSCF 131 may also send the re-registration notification to the P-CSCF 134; and receive a message for maintaining session returned from the S-CSCF 133.

The HSS 132 receives the query message sent from the I-CSCF 131 and returns a query response message including P-CSCF 134 information to the I-CSCF 131. The HSS 132 may also interact re-registration message with the S-CSCF 133 and interact re-registration message with the I-CSCF 136.

The S-CSCF 133 receives the session invitation message sent from the I-CSCF 131 and forwards the session invitation message to the P-CSCF 134 directly or via the I-CSCF 136. The S-CSCF 133 may also interact the re-registration message with the HSS 132 and interact the re-registration message with the P-CSCF 134 directly or via the I-CSCF 136. Further, the S-CSCF 133 may also return a message for maintaining session to the I-CSCF 111.

The P-CSCF 134 receives the session invitation message forwarded by the S-CSCF 133 and forwards the session invitation message to the UE 135. The P-CSCF 134 may also receive the re-registration notification sent from the I-CSCF 131 and forward the re-registration notification to the UE 135. Further, the P-CSCF 134 may also interact the re-registration message with the UE 135 and interact the re-registration message with the S-CSCF 133 directly or via the I-CSCF 136.

The UE 135 receives the session invitation message forwarded by the P-CSCF 134, and may receive the re-registration notification forwarded by the P-CSCF 134. The UE 135 may also interact the re-registration message with the P-CSCF 134.

The optional unit I-CSCF 136 receives the session invitation message forwarded by the S-CSCF 133 and then forwards the session invitation message to the P-CSCF 134. The I-CSCF 136 may also forward the re-registration message between the S-CSCF 133 and the P-CSCF 134, and interact the re-registration message with the HSS 132.

Fig. 14 is a schematic diagram showing a process for realizing called service according to this embodiment, including the following steps:

The description of Step 1401 ∼ Step 1403 is identical to that of Step 1001 ∼ Step 1003 in the first embodiment.

After step 1403, i.e. after the I-CSCF receives the query response message, the I-CSCF determines whether the S-CSCF assigned to provide service for a called user can provide service. If the assigned S-CSCF can provide service, Step 1405 is carried out. If the assigned S-CSCF cannot provide service, Step 1404 is carried out.

Here, the process for I-CSCF to determine whether S-CSCF assigned to provide service for a called user can provide service may be implemented by various methods in prior art.

Step 1404: The I-CSCF initiates a re-registration notification and sends the re-registration notification to the called user, i.e. the called UE, via the P-CSCF.

Step 1405: The I-CSCF sends a session invitation message to the home S-CSCF of the called user.

As for the S-CSCF in Step 1405, after Step 1403, if the I-CSCF determines that the S-CSCF assigned to provide service for a called user can provide service, the S-CSCF in step 1405 is the assigned S-CSCF; and if the I-CSCF determines that the S-CSCF assigned to provide service for a called user cannot provide service, then before step 1405, the I-CSCF selects a new S-CSCF from a list of available S-CSCFs stored therein, and accordingly, the S-CSCF in step 1405 is the new S-CSCF selected by the I-CSCF.

The process for the I-CSCF to select an S-CSCF may be implemented by various methods in the prior art.

In Step 1405, if the S-CSCF is the new S-CSCF selected by the I-CSCF, the session invitation message sent to the S-CSCF from the I-CSCF may contain a reason value for notifying the S-CSCF that the original S-CSCF cannot provide service and instructing the S-CSCF to wait for the user's re-registration.

In practical application, Step 1405 may be carried out at any position between Step 1403 and Step 1407.

Referring to Step 1005 in the first embodiment, an optional step is shown in Fig. 14 in dotted line, i.e. the S-CSCF may also returns a message for maintaining session to the I-CSCF after receiving the session invitation message forwarded by the I-CSCF and the message for maintaining session may also be 1XX message in SIP.

The description of Step 1406 ∼ Step 1407 is identical to that of Step 1007 ∼ Step 1008 in the first embodiment.

It should be noted that, in the present embodiment, if after Step 1403, the I-CSCF determines that the S-CSCF assigned to provide service for a called user can provide service, Step 1404 and step 1406 may be omitted.

### Embodiment 4

In the present embodiment, the HSS provides P-CSCF information while initiating the re-registration notification to the S-CSCF.

Fig. 15 is a schematic diagram showing a system for realizing called service according to this embodiment. The system shown in Fig. 15 includes an I-CSCF 151, an HSS 152, an S-CSCF 153, a P-CSCF 154, a UE 155, and may further include an I-CSCF 156.

The I-CSCF 151 receives a session invitation message inputted from outside; sends a query message to the HSS 152 and receives a query response message returned from the HSS 152. The I-CSCF 151 also forwards the session invitation message to the S-CSCF 153.

The HSS 152 receives the query message sent from the I-CSCF 151, sends a re-registration notification including P-CSCF 154 information to the S-CSCF 153, and returns a query response message to the I-CSCF 151. The HSS 152 also interacts the re-registration message with the S-CSCF 153. Further, the HSS 152 may also receive a re-registration response message returned from the S-CSCF 153, and interact the re-registration message with the I-CSCF 156.

The S-CSCF 153 receives a re-registration notification including P-CSCF 154 information sent from the HSS 152, and sends a re-registration notification to the P-CSCF 154 directly or via the I-CSCF 156. The S-CSCF 153 also interacts re-registration message with the HSS 152 and interacts re-registration message with the P-CSCF 154 directly or via the I-CSCF 156, receives the session invitation message forwarded by the I-CSCF 151 and forwards the session invitation message to the P-CSCF 154 directly or via I-CSCF 156. Further, the S-CSCF 153 may also return a re-registration response message to the HSS 152.

The P-CSCF 154 receives the re-registration notification sent from the S-CSCF 153 directly or via the I-CSCF 156 and forwards the re-registration notification to the UE 155, interacts re-registration message with the UE 155 and interacts re-registration message with the S-CSCF 153 directly or via the I-CSCF 156. The P-CSCF 154 also receives the session invitation message forwarded by the S-CSCF 153 and then forwards the session invitation message to the UE 155.

The UE 155 receives the re-registration notification forwarded by the P-CSCF 154, interacts the re-registration message with the P-CSCF 154, and receives the session invitation message forwarded by the P-CSCF 154.

The optional unit I-CSCF 156 receives the re-registration notification sent from the S-CSCF 153 and then forwards the re-registration notification to P-CSCF 154. The I-CSCF 156 also receives the session invitation message forwarded by the S-CSCF 153 and forwards the session invitation message to the P-CSCF 154. Further, the I-CSCF 156 also forwards the re-registration message between the S-CSCF 153 and the P-CSCF 154, and interacts re-registration message with the HSS 152.

Fig. 16 is a schematic diagram showing a process for realizing called service according to this embodiment, including the following steps:

Step 1601 ∼ Step 1602: The description thereof is identical to that of Step 201 ∼ Step 202.

After Step 1602, after the HSS receives the query message, the HSS typically determines whether the S-CSCF assigned to provide service for a called user can provide service. If the assigned S-CSCF can provide service, Step 1607 is carried out. If the assigned S-CSCF cannot provide service, the HSS selects a new S-CSCF from a list of available S-CSCFs stored therein, and Step 1603 is carried out.

Here, both of the process for the HSS to determine whether the S-CSCF assigned to provide service for a called user can provide service and the process for the HSS to select a S-CSCF may be implemented by various methods in the prior art.

Step 1603: The HSS sends a re-registration notification including P-CSCF information to the selected new S-CSCF.

The re-registration notification in Step 1603 may also be referred to a re-registration notification message.

Step 1604: The S-CSCF sends the re-registration notification to the called user, i.e. the called UE, via the P-CSCF.

If the topology hiding characteristic is used, the re-registration notification is forwarded to the P-CSCF from the S-CSCF via the I-CSCF indicated by the dotted box in Fig. 16.

Fig. 16 shows an optional step 1605 in dotted line, and in practical application, step 1605 may or may not be present.

Step 1605: The S-CSCF returns a response message for the re-registration notification to the HSS.

In practical application, Step 1605 may be carried out at any position after step 1603.

Step 1606: The re-registration procedure initiated by the UE is carried out and the procedure specifically is completely identical to that of step 1007 in the first embodiment.

Step 1607: The HSS returns a query response message to the I-CSCF.

Here, if after step 1602, HSS selects a new S-CSCF and step 1603 is carried out, then in Step 1607, the query response message returned from the HSS contains information on the new S-CSCF selected by the HSS. If after Step 1602, the HSS determines that the S-CSCF assigned to provide service for a called user can provide service, then in Step 1607, the query response message returned from the HSS contains information on the assigned S-CSCF.

In practical application, in addition to those shown in Fig. 16, Step 1607 may also be carried out before step 1603, or at any position between Step 1603 and Step 1609.

Step 1608: the I-CSCF forwards the received session invitation message to the S-CSCF.

The S-CSCF in Step 1608 is the S-CSCF included in the query response message in step 1607, i.e. the S-CSCF included in the query response message received by the I-CSCF.

In practical application, in addition to those shown in Fig. 16, Step 1608 may also be carried out before Step 1603, or at any position between Step 1603 and Step 1609. In addition to being carried out immediately after Step 1607 as shown in Fig. 16, Step 1608 may also be carried out after some steps are carried out after Step 1607.

Referring to step 1005 in the first embodiment, Fig. 16 shows an optional step in dotted line, i.e. the S-CSCF may also returns a response message for maintaining session to the I-CSCF after receiving the session invitation message forwarded by the I-CSCF, and the response message for maintaining session may also be 1XX message in SIP.

Step 1609: The S-CSCF sends a session invitation message to the called UE via the P-CSCF.

If the topology hiding characteristic is used, the received session invitation message is forwarded to the P-CSCF from the S-CSCF in Fig.16 via the I-CSCF indicated by the dotted box.

In practical application, the I-CSCF indicated by the dotted box and that indicated by the solid box in Fig.16 may be two different entities, or may be same entity.

In the first to fourth embodiments of the present invention, the HSS is used to store P-CSCF information. The P-CSCF information may be stored in the HSS during the registration of the user, before the called procedure in first to fourth embodiments. The process for the registration of the user before the called procedure may be as shown in Fig. 17 or 18.

Fig. 17 is a schematic diagram showing a first process for a user to register before the called procedure according to an embodiment of the present invention. In Fig. 17, the I-CSCF provides user's P-CSCF information to the HSS, and the process shown in Fig. 17 includes the following steps.

Step 1701: Description thereof is completely identical to that of Step 401.

Step 1702: The I-CSCF sends a query message for querying the S-CSCF to the HSS and sends the P-CSCF information of the user to the HSS for storing at the same time.

In Step 1702, the I-CSCF may also send to the HSS CONTACT information of a user and other information related to user's subscription such as parameters of CALLID, CSEQ, and TAG.

Step 1703∼Step 1716: The description thereof is identical to that of step 403∼step 416.

In practical application, the process for the I-CSCF to provide the P-CSCF information to the HSS may be carried out in step 1709 instead of step 1702 in Fig.17, and at this time, step 1709 is replaced by Step 1709a.

Step 1709a: The I-CSCF sends a query message for querying the S-CSCF to the HSS, and sends the P-CSCF information of the user to the HSS for storing at the same time.

In Step 1709a, the I-CSCF may also send to the HSS CONTACT information and other information related to user's subscription such as parameters of CALLID, CSEQ, and TAG.

In practical application, the step of providing the P-CSCF information to the HSS may also be carried out when the S-CSCF sends to the HSS a request for downloading data or reports data, for example, as shown in Fig. 18.

Fig. 18 is a diagram showing a second process for a user to register before the called procedure according to an embodiment of the present invention. In Fig. 18, the S-CSCF provides to the HSS the P-CSCF information of the user, and the process shown in Fig. 18 includes the following steps:

Step 1801∼Step 1804: The description thereof is identical to that of Step 401∼Step 404.

Step 1805: The S-CSCF sends an authentication message to the HSS, and sends the P-CSCF information of the user to the HSS for storing at the same time.

In step 1805, the S-CSCF may also send to the HSS CONTACT information and other information related to user's subscription such as parameters of CALLID, CSEQ, and TAG.

Step 1806∼Step 1816: The description thereof is identical to that of Step 406∼Step 416.

In practical application, the process for the S-CSCF to provide the P-CSCF information of the user to the HSS may be carried out in Step 1812 or Step 1814 instead of step 1805 in Fig.18.

Here, Step 1812 is replaced by Step 1812a when the process for the S-CSCF to provide the P-CSCF information of the user to the HSS is carried out in Step 1812.

Step 1812a: The S-CSCF reports data to the HSS, and sends the P-CSCF information of the user to the HSS for storing at the same time.

In Step 1812a, the S-CSCF may also send to the HSS CONTACT information and other information related to user's subscription such as parameters of CALLID, CSEQ, and TAG.

When the process for the S-CSCF to provide the P-CSCF information of the user to the HSS is carried out in step 1814, step 1814 is replaced by step 1814a.

Step 1814a: The S-CSCF sends to HSS a request for downloading data, and sends the P-CSCF information to the HSS for storing at the same time.

In Step 1814a, the S-CSCF may also send to the HSS CONTACT information and other information related to user's subscription such as parameters of CALLID, CSEQ, and TAG.

In the present invention, one of more of Step 1007 in the first embodiment, Step 1209 in the second embodiment, Step 1406 in the third embodiment and Step 1606 in the fourth embodiment may also be identical to the process shown in Fig.17 or 18.

In the first to fourth embodiments of the present invention, the NOTIFY message in SIP may be utilized when sending re-registration notification to a user. There may be multiple implementation when sending re-registration notification by using the NOTIFY message. For example,
method A: utilizing necessary parameters such as CALLID, CSEQ and TAG for UE to subscribe registration state when creating NOTIFY message; or
method B: performing semantic conversion for NOTIFY and modifying UE's parameters to make UE understand a NOTIFY message without subscription. Specifically, when parameters such as CALLID, CSEQ and TAG in the NOTIFY message are different from those in the subscription state, the UE can also understand. The specific method for modifying UE's parameters may be implemented using various methods in the prior art.

The NOTIFY semantic conversion in method B means that NOTIFY in the prior art is a response when the UE sends a subscription information, while in the embodiments of the present invention, it is used to send a notification to the UE. In addition, information included in NOTIFY of method B is insufficient for common UE to retrieve original subscription, and thus the UE's parameters need to be modified to enable the UE to understand the NOTIFY message without subscription.

In the first to fourth embodiments, when sending re-registration notification to a user, if it is intended to use both NOTIFY message and method A, it is required to acquire parameters required for the UE to subscribe registration state, There may be multiple specific methods for acquiring parameters required for UE to subscribe registration state and the acquiring method provided in embodiments of the present invention is as follows: parameters required for the UE to subscribe registration state is first stored in HSS, and then, as required, transferred from the HSS to a unit that creates re-registration notification with NOTIFY message, for example, transferring the necessary parameters while transferring P-CSCF in the first to third embodiments.

In embodiments of the present invention, the process of storing parameters required for UE to subscribe registration state in the HSS may be a process of storing CONTACT information, parameters such as CALLID, CSEQ and TAG in the HSS when a user registers before the called procedure as shown in Fig.17 or 18, or a process of storing them after the registration of the user as shown in Fig.19.

Fig. 19 is a schematic diagram showing a process for storing registration information in the HSS when a user is subscribing registration state of itself, including the following steps.

Step 1901∼ Step 1902: The description thereof is identical to that of Step 501∼Step 502.

Step 1903: The S-CSCF sends information required for subscribing session to the HSS (PUT (Subscription information)).

The information required for subscribing session includes CONTACT information, parameters such as CALLID, CSEQ, and TAG, and the information required for subscribing session can be used to form a NOTIFY re-registration notification.

In practical application, Step 1903 may be carried out between Step 1901 and Step 1902.

The parameters required for UE to subscribe registration state stored in the HSS may be transferred together with the P-CSCF information stored in the HSS to a unit that creates re-registration notification with the NOTIFY message. Specifically, different implementation in the first to fourth embodiments are:

In the first embodiment: in Step 1003, when the HSS sends the P-CSCF information to the I-CSCF, CONTACT information and parameters required for UE to subscribe registration state such as CALLID, CSEQ and TAG may be sent at the same time. And in Step 1004, when the I-CSCF sends to the S-CSCF a session invitation message including the P-CSCF information, CONTACT information and parameters required for UE to subscribe registration state such as CALLID, CSEQ and TAG are sent to the S-CSCF at the same time, and the S-CSCF creates a re-registration notification with the NOTIFY message.

In the second embodiment: in step 1207, when the HSS sends to the S-CSCF a query response message including the P-CSCF information, CONTACT information and parameters required for UE to subscribe registration state such as CALLID, CSEQ and TAG may be sent at the same time, and a re-registration notification is generated by the S-CSCF with the NOTIFY message.

In the third embodiment: in Step 1403, when the HSS sends to the I-CSCF a query response message including the P-CSCF information, CONTACT information and parameters required for UE to subscribe registration state such as CALLID, CSEQ and TAG may be sent at the same time, and a re-registration notification is generated by the I-CSCF with the NOTIFY message.

In the fourth embodiment: in Step 1603, when the HSS sends to the S-CSCF a re-registration notification including the P-CSCF information, CONTACT information and parameters required for UE to subscribe registration state such as CALLID, CSEQ and TAG may be sent at the same time, and a re-registration notification is generated by the S-CSCF with the NOTIFY message.

In practical application, in addition to the NOTIFY message, messages in SIP or notification (INFO) message or registration (REGISTER) message may also be used to send re-registration notification to a user in the first to fourth embodiments, wherein if MESSAGE message or INFO message or REGISTER message is used, method B, i.e. the method of performing semantic conversion on message and modifying UE parameters, may be used for specific implementation, and specific process may be clear by referring to related description herein with respect to method B.

Figs.20, 21, 22 and 23 are principle diagrams of creating by the S-CSCF a re-registration notification with the NOTIFY message, MESSAGE message, INFO message, RIGISTER message and then sending it from the S-CSCF to the P-CSCF, respectively.

In the first to third embodiments of the present invention, in order to ensure consistency between the S-CSCF selected during re-registration and S-CSCF selected during being called, the information on the selected S-CSCF may be stored in the HSS before initiating the re-registration procedure. Specifically, the method of storing the information on the selected S-CSCF in the HSS may be as shown in Fig.24 or Fig. 25.

In the fourth embodiment 4 of the present invention, since the HSS selects a new S-CSCF and the HSS sends the re-registration notification to the S-CSCF in Step 1603, the consistency between the S-CSCF selected during re-registration and that selected during being called may be ensured.

Fig. 24 is a diagram showing a first process for storing information on the selected S-CSCF in the HSS according to an embodiment of the present invention, which includes the following steps.

Step 2401∼Step 2402: The I-CSCF sends to the HSS a message for querying the S-CSCF, and the HSS returns a query response message to the I-CSCF.

Step 2403: the I-CSCF notifies the HSS of the result selected by the S-CSCF (PUT (S-CSCF)).

Fig. 24 also shows an optional step 2404 in dotted line, and in practical application, step 2404 may or may not be present.

Step 2404: The HSS returns a query response message to the I-CSCF (PUT RESPONSE).

When steps shown in Fig.24 are applied in the first embodiment, Step 2401∼Step 2402 are same as Step 1002∼Step 1003, and Step 2403∼Step 2404 are carried out between Step 1003 and Step 1007.

When steps shown in Fig.24 are applied in the second embodiment, Step 2401∼Step 2402 are same as Step 1202∼Step 1203, and Step 2403∼Step 2404 are carried out between step 1203 and step 1209.

When steps shown in Fig.24 are applied in the third embodiment, Step 2401∼Step 2402 are same as Step 1402∼Step 1403, and Step 2403Sstep 2404 are carried out between Step 1403 and Step 1406.

Fig. 25 is a diagram showing a second process for storing information on the selected S-CSCF in the HSS according to an embodiment of the present invention, which includes the following steps.

Step 2501: the S-CSCF sends to the HSS information that the S-CSCF itself is selected (PUT (S-CSCF)).

Step 2501 is used for the S-CSCF to send to the HSS a request for indicating that the user is desired to register with the S-CSCF itself in subsequent re-registration process.

Fig. 25 shows an optional step 2502 in dotted line, and in practical application, step 2502 may or may not be present.

Step 2502: The HSS returns a query response message to the S-CSCF (PUT RESPONSE).

When steps shown in Fig.25 are applied in the first embodiment, Step 2501∼Step 2502 are carried out between Step 1004 and Step 1007.

When steps shown in Fig.25 are applied in the second embodiment, Step 2501∼Step 2502 are carrier out between Step 1204 and Step 1209.

When steps shown in Fig.25 are applied in the third embodiment, Step 2501∼Step 2502 are carried out between Step 1405 and Step 1406.

For the second embodiment, in addition to methods shown in Figs.24 and 25, the method for storing information on the selected S-CSCF in the HSS may also be as follows: in step 1206, when the S-CSCF sends a query message to the HSS, the S-CSCF sends to the HSS information that the S-CSCF itself is selected at the same time, and at this time, step 1206 is replaced by step 1206a.

Step 1206a: The S-CSCF sends to the HSS a query message for querying the P-CSCF information of the called user, and the query message includes information that the S-CSCF has been selected.

In the embodiments of the present invention, in process involving called service or registration or subscription, the P-CSCF information needs to be carried in the message and sometime CONTACT information needs to be carried as well. Carrying of P-CSCF information or CONTACT information may be implemented by reusing or adding or extending information element. The reusing of information element means that the original element is used and its semantic meaning keeps unchanged while being used in a new filed or context. The adding of information element means that an element is added and the name, semantic meaning of the added element are different from that of the existing one. The extending of information element means that the original element is used and its semantic meaning is extended so as to extend the scope of its usage. The CONTACT information in the embodiments of the present invention may be a CONTACT address.

For example, the carrying of P-CSCF information and/or CONTACT information may be implemented by reusing the following messages: UAR, LIA, MAR, SAR, RTA, PPA, MAA, RTR or other messages. The parameter Visited-Network-Identifier may be used for reusing and extending. In addition, a message may also be added to acquire P-CSCF information and CONTACT information.

For example, the process for the I-CSCF to obtain P-CSCF information and CONTACT information from the HSS may be implemented by adding some parameters in the LIA message shown in Table 1. The newly added parameters in the LIA may be reused or extended parameters or may be newly added parameters. Table 2 is a description of added parameters in the LIA, specifically the added parameters are as follows:

**Table 2**

| Parameter name in 3GPP protocol (Information element name) | Parameter name in AVP protocol (Mapping to Diameter AVP) | Characteristic (Cat.) | Description |
|---|---|---|---|
| Visited-Network-Identifier | Visited-Network-Identifier | Necessary parameters (M) | P-CSCF address (When I-CSCF request S-CSCF address or S-CSCF capabilities. HSS also return P-CSCF Address to I-CSCF) |
| UE Contact Address | UE Contact Address | Conditional optional parameters(C) | UE contact address (When I-CSCF request S-CSCF address or S-CSCF capabilities. HSS also return UE Contact Address to I-CSCF Contact Address is a SIP UE's contact address) |

In Table 2, the parameter Visited-Network-Identifier for carrying P-CSCF address may be reused and may also be extended. For example, the original parameter Visited-Network-Identifier can be extended to cause its semantic meaning to be changed from original network identifier (Identifier that allows the home network to identify the visited network) to P-CSCF address; and the parameter UE CONTACT Address for carrying CONTACT address is a newly added parameter.

In Step 1003 in the embodiments of the present invention, when S-CSCF obtains P-CSCF information and CONTACT information from I-CSCF, the carrying of P-CSCF information and CONTACT information may be implemented by extending or reusing P-Visited-Network-ID parameter, or extending TO head domain, or extending request universal resource identifier (URI) head domain or adding IE.

In the embodiments of the present invention, notifying result of selecting S-CSCF or sending information that an S-CSCF is selected may be implemented by reusing, or adding or extending information element.

For example, in Step 2403 in the embodiment of the present invention, the process for I-CSCF to notify the HSS of the result of selecting S-CSCF may be implemented by adding message or reusing UAR message. In Step 2501 and Step 1206a of the embodiments of the present invention, the process for S-CSCF to send to HSS information that the S-CSCF itself is selected may be implemented by adding a message or reusing MAR message or SAR message.

It is noted that, in the present invention, the modification of each interface message may be performed by adding, or extending or reusing IE, wherein if the original information cannot satisfy requirements of procedure, a new message will be added to carry the required information.

In addition, any information between S-CSCF and P-CSCF in the present invention may be forwarded by I-CSCF. In the embodiments of the present invention, for convenience of description, forwarding of re-registration notification, forwarding of session invitation message and forwarding of re-registration message are all carried out by a same I-CSCF entity. In practical, each forwarding of any information between S-CSCF and P-CSCF may be carried out by a same I-CSCF entity and may also be carried out by different I-CSCF entity.

The above are only referred embodiments of the present invention and are not for limiting the scope of the present invention.

## Claims

1. A method for realizing called service, comprising the steps of:
A. determining a new Service Call Session Control Function, S-CSCF, for a called user at a network side after it is determined that an S-CSCF currently providing service to the called user cannot provide the service, and sending a re-registration notification to the called user via a Proxy Call Session Control Function, P-CSCF, of the called user according to P-CSCF information of the called user stored in a Home Subscriber Server, HSS;
B. performing, by the called user, re-registration, and
C. transferring a session invitation message to the called user via the new S-CSCF.

2. The method of claim 1, the method further comprising :
prior to step A, receiving, by an Interrogating Call Session Control Function, I-CSCF, a session invitation message from outside;
wherein the step A comprises:
A11. sending, by the I-CSCF, a query message for querying an S-CSCF to the HSS;
returning, by the HSS, a query response message including S-CSCF information on an S-CSCF currently providing service to the called user and P-CSCF information on a P-CSCF currently providing service to the called user, to the I-CSCF;
A12. determining, by the I-CSCF, a new S-CSCF after it is determined that the S-CSCF currently providing service to the called user cannot provide service, and sending a session invitation message including the P-CSCF information to the new S-CSCF; and
A13. sending the re-registration notification from the new S-CSCF to the called user via the P-CSCF.

3. The method of claim 1, the method further comprising:
prior to step A, receiving, by the I-CSCF, a session invitation message from outside;
wherein the step A comprises:
A21. sending, by the I-CSCF, a query message for querying an S-CSCF to the HSS;
returning, by the HSS, a query response message including S-CSCF information on an S-CSCF currently providing service to the called user, to the I-CSCF;
A22. determining, by the I-CSCF, a new S-CSCF after it is determined that the S-CSCF currently providing service to the called user cannot provide service, and forwarding the received session invitation message to the new S-CSCF;
A23. sending, by the new S-CSCF, a query message to the HSS;
returning, by the HSS, a query response message including the P-CSCF information to the new S-CSCF; and
A24. sending, by the new S-CSCF, a re-registration notification to the called user via the P-CSCF.

4. The method of claim 1, the method further comprising:
prior to step A, receiving, by the I-CSCF, a session invitation message from outside;
wherein the step A comprises:
A31. sending, by the I-CSCF, a message for querying an S-CSCF to the HSS;
returning, by the HSS, a query response message including S-CSCF information, on an S-CSCF currently providing service to the called user and P-CSCF information on a P-CSCF currently providing service to the called user, to the I-CSCF; and
A32. sending, by the I-CSCF, a re-registration notification to the called user via the P-CSCF and determining a new S-CSCF after it is determined that the S-CSCF currently providing service to the called user cannot provide service;
the method further comprising:
between step A32 and step C, sending, by the I-CSCF, a session invitation message to the new S-CSCF.

5. The method of claim 4, wherein the session invitation message received by the new S-CSCF includes information indicating the S-CSCF assigned to provide service to the called user cannot provide service.

6. The method of claim 1, the method further comprising:
prior to step A, receiving, by the 1-CSCF, a session invitation message from outside;
wherein the step A comprises:
A41. sending, by the I-CSCF, a query message for querying an S-CSCF to the HSS;
receiving, by the HSS, the query message, and determining a new S-CSCF after it is determined that the S-CSCF currently providing service to the called user cannot provide service;
A42. sending, by the HSS, a re-registration notification to the new S-CSCF, and sending the P-CSCF information to the new S-CSCF; and
A43. sending, by the new S-CSCF, the re-registration notification to the called user via the P-CSCF after receiving the re-registration notification;
the method further comprising:
between step A41 and step C, returning, by the HSS, a query response message including information on the new S-CSCF selected by the HSS, to the I-CSCF, ;
the method further comprising:
prior to step C, sending, by the I-CSCF, a session invitation message to the new S-CSCF after receiving the query response message.

7. The method of claim 1, wherein the information between the new S-CSCF and the P-CSCF is transferred via the I-CSCF.

8. The method of any one of claims 2 to 5, after receiving, by the I-CSCF, the query response message returned from the HSS, the method further comprising:
prior to step B, sending, by the I-CSCF, the determined new S-CSCF information to the HSS.

9. The method of any one of claims 2 to 5, after receiving, by the new S-CSCF, the session invitation message, the method further comprising:
prior to step B, sending, by the new S-CSCF, information indicating that the new S-CSCF itself is selected, to the HSS.

10. The method of claim 1, wherein the P-CSCF information of the called user is stored in the HSS during the registration of the called user;
the method further comprising:
prior to step A, sending, by the called user, a registration request to the network side via the P-CSCF; and
storing, by the network side, the P-CSCF information in the HSS after receiving the registration request.

11. The method of claim 10, wherein storing the P-CSCF information in the HSS comprises:
storing the P-CSCF information of the called user in the HSS when the I-CSCF at the network side sends a query message to the HSS during the registration; or
storing the P-CSCF information of the called user in the HSS when the S-CSCF at the network side sends an authentication message to the HSS during the registration; or
storing the P-CSCF information of the called user in the HSS when the S-CSCF at the network side reports data to the HSS during the registration; or
storing the P-CSCF information of the called user in the HSS when the S-CSCF at the network side sends a request for downloading data to the HSS during the registration.

12. The method of claim 10, wherein the HSS stores CONTACT information, call identification, CALLID, Command Sequence, CSEQ, and TAG of the called user while storing the P-CSCF information, and
the re-registration notification initiated at the network side is created based on the CONTACT information, CALLID, CSEQ and TAG stored in the HSS.

13. The method of claim 10, wherein the called user sends to the S-CSCF a message for subscribing registration state after receiving a successful registration message, and the S-CSCF sends subscribed information to the HSS after receiving the message for subscribing registration state; and
the re-registration notification initiated at the network side is created based on the subscription information of the called user stored in the HSS.

14. The method of any one of claims 1 to 7 and 10 to 13, wherein the re-registration notification is transferred via NOTIFY message, MESSAGE message, INFO message or REGISTER message.

15. The method of any one of claims 2 to 6, wherein the message including the P-CSCF information further includes CONTACT information, CALLID, CSEQ and TAG of the called user; and
the re-registration notification is created based on the CONTACT information, CALLID, CSEQ and TAG of the called user.

16. The method of any one of claims 2 to 6 and 10 to 13, wherein carrying of the P-CSCF information is implemented by reusing, or extending or adding information element.

17. The method of claim 12, wherein carrying of the CONTACT information is implemented by reusing, or extending or adding information element.

18. The method of claim 15, wherein carrying of the CONTACT information is implemented by reusing, or extending or adding information element.

19. The method of claim 8, wherein sending of the determined new S-CSCF information from the I-CSCF to the HSS is implemented by reusing, or extending or adding information element.

20. The method of claim 9, wherein sending of the information indicating that the new S-CSCF itself is selected from the new S-CSCF to the HSS is implemented by reusing, or extending or adding information element.

21. The method of any one of claim 1 to 7 and 10 to 13, wherein the P-CSCF information is a P-CSCF address.

22. The method of claim 12, wherein the CONTACT information is a CONTACT address.

23. The method of claim 15, wherein the CONTACT information is a CONTACT address.

24. A system for realizing called service, comprising a first I-CSCF, an HSS, an S-CSCF, a P-CSCF, a user equipment, UE,
wherein the first I-CSCF is adapted to receive a session invitation message inputted from outside, forward the session invitation message to the S-CSCF for forwarding, and interact information with the HSS;
the S-CSCF is adapted to receive the session invitation message and forward the session invitation message to the P-CSCF;
and the P-CSCF is adapted to receive the session invitation message and forward the session invitation message to the UE,
wherein the HSS is further adapted to provide P-CSCF information stored therein and interact the re-registration message with the S-CSCF;
the P-CSCF is further adapted to interact the re-registration message with the S-CSCF, interact the re-registration message with the UE, receive the re-registration notification and forward the re-registration notification to the UE.

25. The system of claim 24, wherein the HSS is further adapted to send the P-CSCF information to the first I-CSCF;
the system further comprises: a connection, between the first I-CSCF and the S-CSCF, adapted to send the P-CSCF information from the first I-CSCF to the S-CSCF;
the system further comprises: a connection, between the S-CSCF and the P-CSCF, adapted to send the re-registration notification from the S-CSCF to the P-CSCF.

26. The system of claim 24, wherein the HSS is further adapted to send the P-CSCF information to the S-CSCF;
the system further comprises: a connection, between the S-CSCF and the HSS, adapted to send a query message from the S-CSCF to the HSS and return a query response message from the HSS to the S-CSCF;
the system further comprises: a connection, between the S-CSCF and the P-CSCF, adapted to send the re-registration notification from the S-CSCF to the P-CSCF.

27. The system of claim 24, wherein the HSS is further adapted to send the P-CSCF information to the first I-CSCF;
the system further comprises: a connection, between the first I-CSCF and the P-CSCF, adapted to send the re-registration notification from the first I-CSCF to the P-CSCF.

28. The system of claim 24, wherein the HSS is further adapted to send the P-CSCF information to the S-CSCF;
the system further comprises: a connection, between the S-CSCF and the P-CSCF, adapted to send the re-registration notification from the S-CSCF to the P-CSCF.

29. The system of any one of claims 24 to 27, the system further comprising:
a connection, between the first I-CSCF and the HSS, adapted to send the S-CSCF information from the first I-CSCF to the HSS.

30. The system of any one of claims 24 to 27, the system further comprising:
a connection, between the S-CSCF and the HSS, adapted to send information of the S-CSCF to the HSS.

31. The system of claim 24, the system further comprising:
a second I-CSCF, between the S-CSCF and the P-CSCF, adapted to receive information sent from the S-CSCF, forward the information from the S-CSCF to the P-CSCF, receive information sent from the P-CSCF and forward the information from the P-CSCF to the S-CSCF.

32. The system of claim 31, wherein the second I-CSCF and the first 1-CSCF are same entity or two different entities.

33. The system of any one of claims 24 to 28, 31 and 32, the system further comprising:
a connection, between the first I-CSCF and the HSS, adapted to send the P-CSCF information from the first I-CSCF to the HSS.

34. The system of any one of claims 24 to 28, 31 and 32, the system further comprising:
a connection, between the S-CSCF and the HSS, adapted to send the P-CSCF information from the S-CSCF to the HSS.
